# EUROPEAN PATENT APPLICATION

(11) **EP 4 768 347 A2**
(43) Date of publication of application: **01.07.2026**
(21) Application number: 26178189.2
(22) Date of filing: 05.09.2025
(51) Int. Cl.: B60R 19/38

(54) **DEVICE FOR MOUNTING AN IMPACT OR SHOCK ABSORBER ON OR TO A VAN, FOR ABSORBING ENERGY FROM VEHICLES COLLIDING WITH SAID VAN**

(30) Priority: 13.09.2024 NL 2038628
(62) Divisional of application: 25200675.4
(71) Applicant: Verdegro Holding B.V., 4879 NE Etten-Leur (NL)
(72) Inventor: Verwijs, Gerrit Cornelis, Bergen op Zoom (NL)
(74) Representative: IP Maison

(57) **Abstract**

Device for mounting a collision or impact device for absorbing energy from vehicles colliding with the van on or to said van, comprising:
- First gripping means for mounting to a roof, in particular to one or more roof rack fixing rails provided thereon, of the van;
- Second means of attachment to a chassis, in particular to an associated carrier, even more particularly to a tow bar, of the van;
- A suspension structure extending between the first and second gripping devices for the impact or bumping device;
- An impact or bumping device connected to the suspension structure, such as an impact or bumping pad or an energy-dissipating device with cutting blades, arranged to be moved relative to the suspension structure between:
∘ A collapsed resting condition where the impact or bump device is positioned against a rear or top of the van; and.

An unfolded use condition, where the impactor extends backwards from the rear of the van.

## Description

The present invention relates to a device for mounting a collision or impact device for absorbing energy from vehicles colliding with the van on or to said van. Such devices are generally known as Truck Mounted Attenuators (TMA), and in particular from the present applicant's International Patent Application WO2017138809. In this application, an energy dissipating device with cutting blades is described.

TMAs, as the name suggests, are mounted on trucks and are usually permanently connected to them. Yet it may also be desirable to fit vans with such an attenuator, given the number of accidents that happen to vans parked for work along motorways.

However, those vans are generally primarily intended for other purposes, such as transporting work supplies, and not merely as a mobile carrier of an impact or attenuator, which makes it desirable that such an impact or attenuator can be temporarily attached to and/or removed from it.

Whereas trucks fitted with a TMA are or will be specially manufactured or converted for this purpose, the same is not necessarily true of vans. Their construction does not simply allow the attachment of heavy attributes, and also the requirements of removability and/or not hindering the regular use of the van such as its rear doors when a TMA is fitted, constitute a relatively complicated boundary condition.

It is therefore an object of the present invention to provide a device for mounting on or to a van a collision or impact device for absorbing energy from vehicles colliding with the van, which removes the above disadvantages, and/or removes obstacles.

To this end, the invention provides a device for mounting a collision or impact device for absorbing energy from vehicles colliding with a van, on or to said van, comprising:
- First gripping means for mounting to a roof of the van, in particular to one or more roof rack mounting rails provided thereon;
- Second gripping means for mounting to a chassis, in particular to a carrier connected to said chassis, even more particularly to a tow bar, of the van;
- A suspension structure for the impact or bump device, extending between the first and second gripping means, and;
- An impact or bumping device connected to the suspension structure, such as an impact or buffing pad, arranged to be moved relative to the suspension structure between:
   ∘ A collapsed resting position where the impact or bumping device is positioned against a rear or top of the van; and.
   ∘ An unfolded use condition, where the impactor extends backwards from the rear of the van.

The first and second gripping means and the suspension structure connected to and extending between them may collectively form a frame or auxiliary chassis for carrying the impact or bumping device, and thereby distribute the forces required for carrying it to the van such that no further structural modifications to that van are required. Such a van is generally equipped with roof rack mounting rails and often also with a rear-mounted carrier that extends transversely to the rear of the van and is connected to the chassis, in particular one designed as a tow bar. Secondary means of attachment may be engaged on such a carrier. The impact device may comprise a cushion or similar damping device, but preferably an energy-dissipating device with cutting blades, in which the impact of an impact is absorbed by using the impulse to cut metal or aluminium tubes with blades attached to an impact surface as described in EP3414397.

In order to be able to use the van also for regular operations, or to change the TMA between different vans, the first and second attachments may preferably be detachable attachments. For the purpose of mounting on roof rack mounting rails, these can be clamp, screw or bolt means.

The gripping means and the supporting structure of the device according to the invention may at least partly be made of aluminium or plastics - fibre-reinforced or not - in order to burden the van with as little weight as possible.

Since such roof rack mounting rails are commonly located on either side of the roof of a van, at the level of the transition between the roof and side wall of a van, it is advantageous when the first means of engagement include mutually parallel rod or beam-shaped elements arranged to extend across the roof of the van during use in a longitudinal direction.

The tow bar generally extends at the level of the rear bumper and/or under rear doors of the van, in the form of a tubular beam. For attachment thereto, the second means of attachment may be hook, clamp or support elements arranged to engage with or support the chassis or the carrier connected to the chassis, in particular the tow bar or such a carrier attached to the rear of the van and extending more particularly in a width direction along the rear of the van.

The impact or bumping device may be rotatably connected to the suspension structure, wherein it is positioned against a rear of the van in the collapsed resting position, hinged at a bottom, at the level of the tow bar, the rear bumper and/or under the rear doors.

Alternatively, the impact or bumping device may be translatably connected to the suspension structure, whereby the impactor is positioned on the roof of the van in its collapsed resting position. The impact or bumping device may also remain in horizontal orientation when moving between the collapsed and unfolded resting position. To this end, it first moves across the roof to the rear of the van by means of horizontal translation and then down to the unfolded use position by means of vertical translation.

Guides and a drive system may be provided for the horizontal and vertical translational movements.

In a further embodiment, the suspension structure is arranged to extend from the first to the second engagement means along the rear sides of the van when mounted, thereby providing an opening for opening one or more rear doors or a tailgate of the van.

The device according to the invention may further comprise a signalling board connected to the suspension structure. The signalling sign may be movable between a horizontal resting state and a vertical operating state by rotation about a horizontal axis of rotation extending in the width direction of the van, for example at the rear of the roof.

The invention will be explained with reference to the following illustrations. Herein:
- Figure 1 shows a first embodiment of a device according to the present invention, mounted on a van, in a collapsed resting state;
- Figure 2 shows a first embodiment of a device according to the present invention, mounted on a van, in an unfolded operating state;
- Figure 3 shows a second embodiment of a device according to the present invention, mounted on a van, in a collapsed resting state;
- Figure 4 shows a second embodiment of a device according to the present invention, mounted on a van, in an unfolded operating state;
- Figure 5 shows the second implementation form in an unmounted state;
- Figure 6 shows a bottom view of a van equipped with a device according to the invention with a detail view of an implementation form of the second means of engagement; and
- Figure 7 shows a detail view of an implementation form of the first gripping means.

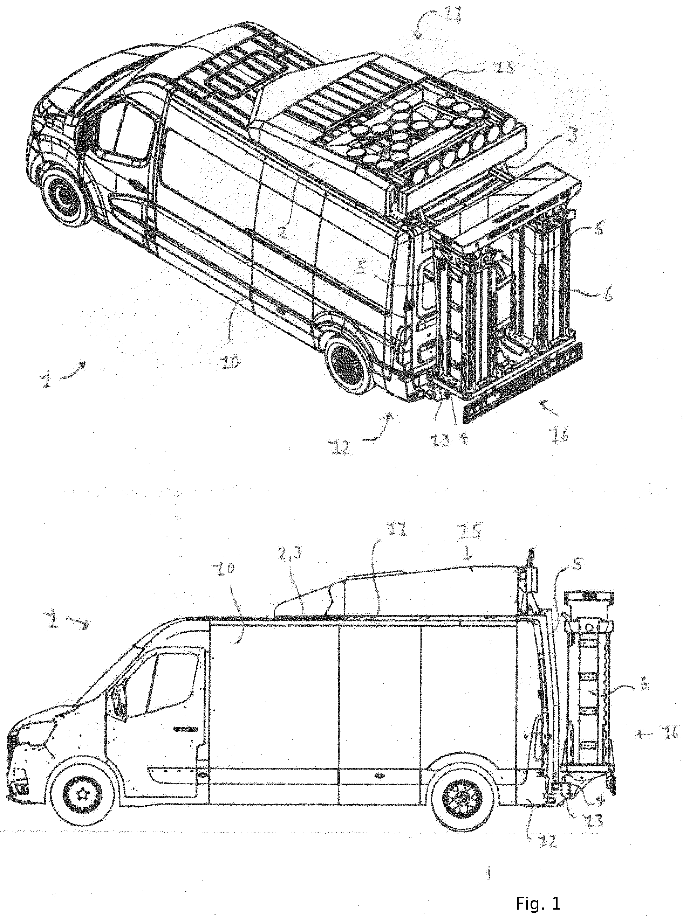

Figure 1 shows a first embodiment of a device 1 according to the present invention, mounted on a van 10, in a collapsed resting state. The device comprises first gripping means 2, 3 for mounting to a roof 11, in particular to one or more roof rack fixing rails provided thereon, of the van, second gripping means 4 for mounting to a chassis 12, in particular to a carrier connected thereto, still more particularly to a tow bar 13, of the van. The device further comprises a suspension structure 5 extending between the first and second gripping means 2, 3, 4 for an impact device 6, and the associated impact device 6 itself, in the example shown embodied as an energy-dissipating device with cutting blades, in the shown condition being in a retracted resting state, the impact device 6 being positioned against the rear of the van 10. The device further comprises a signalling sign 15 which, in the shown condition, is in a horizontal resting position on the roof 11 of the van 10.

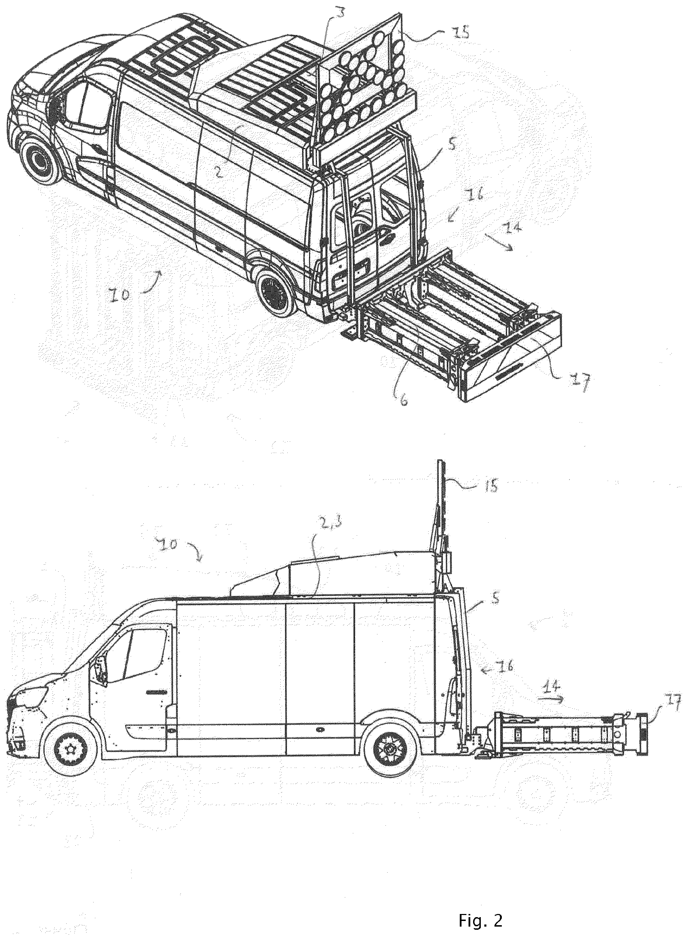

Figure 2 shows the same implementation form 1 in the unfolded operating condition, where the impact device 6 extends backwards 14 from the rear 16 of the van 10.

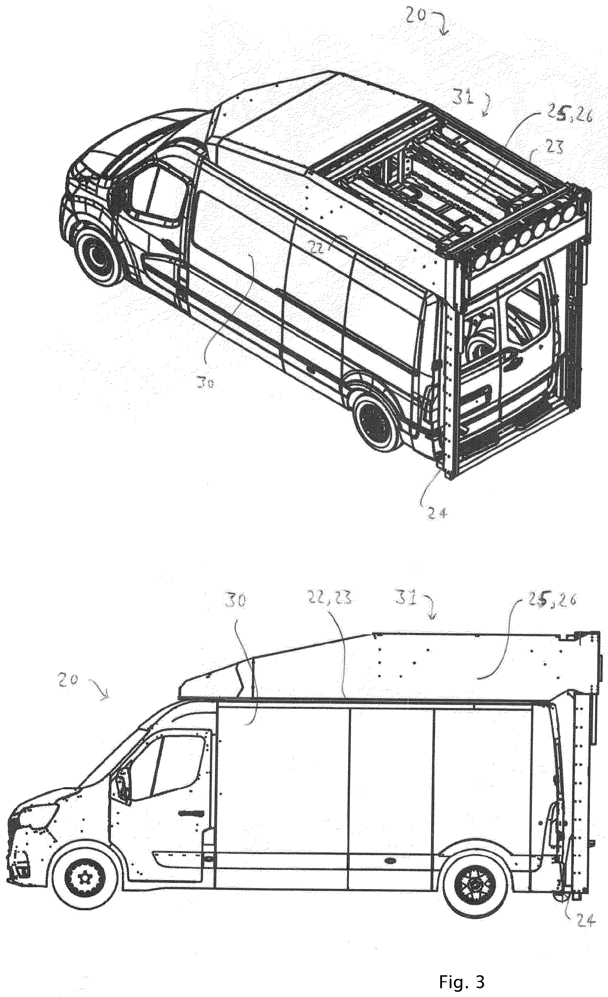

Figure 3 shows a second implementation form 20 of a device according to the present invention, mounted on a van 30, in a collapsed resting state. The device comprises first gripping means 22, 23 for mounting to a roof 31, in particular to one or more roof rack fixing rails provided thereon, of the van 30, second gripping means 24 for mounting to a chassis 32, in particular to a carrier connected therewith, still more particularly to a tow bar 33, of the van. The device further comprises a suspension structure 25 extending between the first and second gripping means 22, 23, 24 for an impact device 26, and the associated impact device 26 itself, in the example shown embodied as an energy-dissipating device with cutting blades, in the state shown being in a collapsed resting state, the impact device 26 being positioned against on the roof 31 of the van 30. The device further comprises a signalling sign 35 which is also located on the roof 31 of the van 10 in the shown condition in a horizontal resting position.

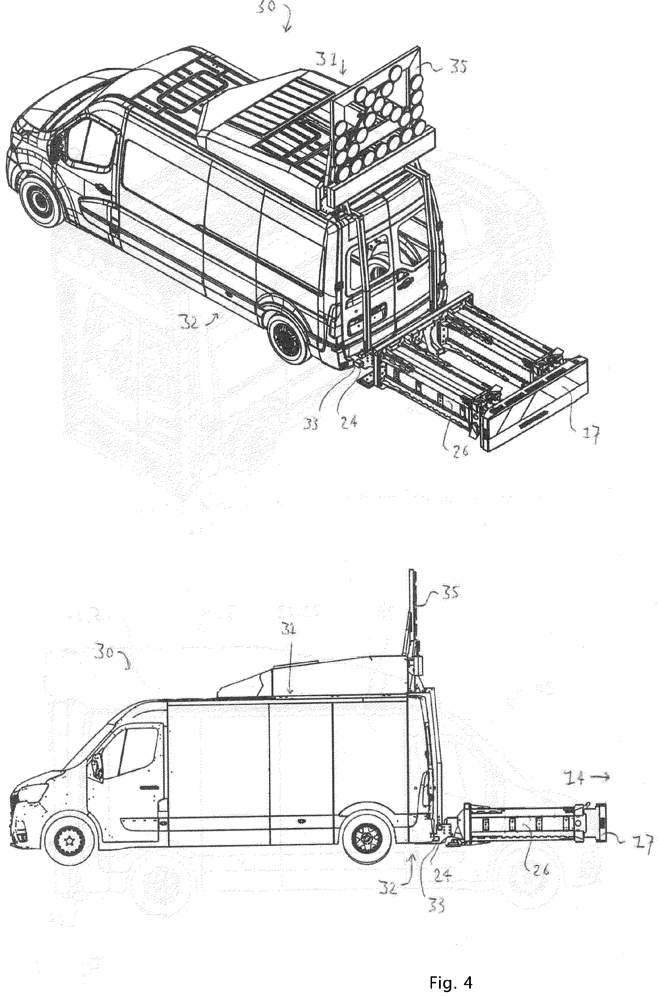

Figure 4 shows the same embodiment 20 in the unfolded operating condition, with the impact device extending backwards 14 from the rear 33 of the van 30.

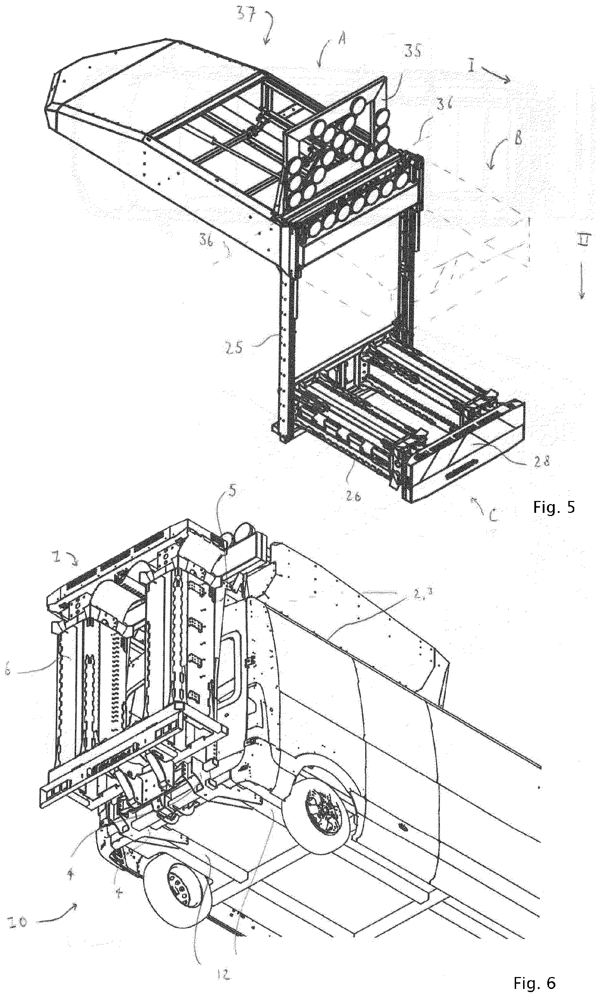

Figure 5 shows the second embodiment of the device according to the invention, as shown in an assembled state in Figures 3 and 4, in an unassembled state. Visible again are first gripping means 22, 23 for mounting to a roof, in particular to one or more roof rack fixing rails provided thereon, of a van, second gripping means 24 for mounting to a chassis, in particular to a carrier connected thereto, more in particular to a tow bar, of the van, a suspension structure 25 extending between the first and second gripping means 22, 23, 24 for the impact or impact device, an energy-dissipating device 26 with cutting blades connected to the suspension structure, arranged to be displaced relative to the suspension structure between a collapsed resting state A in which the impactor is positioned against the top of the van, in order to be displaced by translation in direction I to an intermediate state B, so that subsequently, by translation II, an unfolded operating state C, in which the impactor extends backwards from the rear of the van, can be reached.

The first engagement means of are formed by mutually parallel extending rod or beam-shaped elements 22, 23 arranged to extend longitudinally across the roof of the van during use, and the second means of engagement are hook, clip or support-shaped elements designed to catch on, or support, the chassis or the carrier connected to the chassis, in particular the tow bar or a carrier of this type fitted to the rear of the van and extending, in particular, in a transverse direction along the rear of the van. Also, a signal sign 35 connected to the suspension structure is visible in an unfolded position. This sign can be collapsed by rotation R about rotation axis 36. As that rotation axis 36 is located at the top of the device, the collision or impact device 26 can be transposed underneath it in order to be collapsed down.

The impact device is provided with an arrow marking 17 in order to be clearly visible to traffic behind when unfolded.

Finally, the device has a solar panel 37 arranged as a spoiler, for powering the signalling unit when the device is in use, and/or charging batteries.

Figure 6 shows an underside of the van 10 from figure 1, in which chassis beams 12 are clearly visible. Attached to the chassis beams are second gripping devices 4, in the form of support profiles 4. Connected thereto is the supporting structure 5 for the impact or impact device 6, of the device 1 according to the present invention.

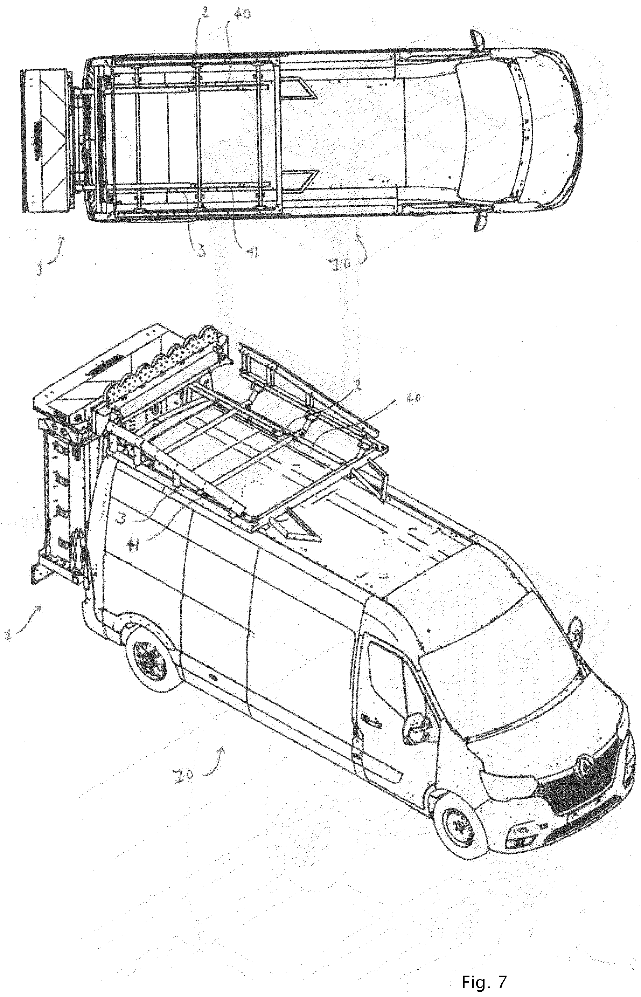

Figure 7 again shows first embodiment of a device 1 according to the present invention, mounted on a van 10, in a collapsed resting state. The device comprises first gripping means 2, 3 for mounting to a roof 11, in particular to one or more roof rack fixing rails 40, 41 provided thereon of the van, which in this shown example are bolted or welded thereon specifically for being able to attach the device 1. Of course, other mounting methods such as clamping or sliding into a rail are also conceivable. The gripping devices 2, 3 are connected to the roof rack fixing rails 40, 41 by means of bolts, but here, too, other fastening methods known in themselves are conceivable.

The embodiments described are examples only and in no way limit the scope of protection of the present application, as defined in the following claims.

## Claims

1. Device for mounting a crash or impact device for absorbing energy from vehicles colliding with a van on or to said van, comprising:
- First gripping means for mounting to a roof of the van, in particular to one or more roof rack mounting rails provided thereon;
- Second gripping means for mounting to a chassis, in particular to a carrier connected to said chassis, even more particularly to a tow bar, of the van;
- A suspension structure for the impact or bump device, extending between the first and second gripping means, and;
- An impact or bumping device connected to the suspension structure, such as an impact or buffing pad, arranged to be moved relative to the suspension structure between:
∘ A collapsed resting position where the impact or bumping device is positioned against a rear or top of the van; and
∘ An unfolded use condition, where the impactor extends backwards from the rear of the van; **characterised in that**
the impact or bumping device is rotatably connected to the suspension structure, wherein it is positioned against a rear of the van in the collapsed resting position, hinged at a bottom, at the level of the tow bar, the rear bumper and/or under rear doors of said van.

2. Device according to claim 1, wherein the suspension structure is arranged to extend along the rear sides of the van from the first to the second means of engagement when mounted, thereby providing an opening for opening one or more rear doors or a tailgate of the van.

3. Device according to claim 1 or 2, further comprising a signalling sign connected to the suspension structure, wherein the signalling sign is movable between a horizontal resting state and a vertical operating state by rotation about a horizontal axis of rotation extending in the width direction of the van at the rear of the roof.

4. Device according to any of the preceding claims, wherein the first and second gripping means are detachable gripping means.

5. Device according to any of the preceding claims, wherein:
- the first gripping means comprise mutually parallel extending rod or beam-shaped elements arranged to extend across the roof of the van during use in a longitudinal direction, and
- the second gripping device is a hook, clamp or support element designed to engage with or support the chassis or a carrier connected to the chassis, in particular the tow bar or a carrier of this type fitted to the rear of the van and extending in particular in a transverse direction along the rear of the van.

6. Device according to any of the preceding claims, wherein the gripping means and the supporting structure of the device are at least partially made of aluminium or plastics - fibre- reinforced or not - in order to load the van with as little weight as possible.

7. Device according to any of the preceding claims, wherein the impact or bumping device is provided with an arrow marking in order to be clearly visible, in the unfolded position, to rear traffic.

8. Device according to any of the preceding claims comprising a solar panel arranged as a spoiler, for feeding the signalling unit when the device is in use and/or for charging batteries.

9. Device for mounting a crash or impact device for absorbing energy from vehicles colliding with a van on or to said van, comprising:
- First gripping means for mounting to a roof of the van, in particular to one or more roof rack mounting rails provided thereon;
- Second gripping means for mounting to a chassis, in particular to a carrier connected to said chassis, even more particularly to a tow bar, of the van;
- A suspension structure for the impact or bump device, extending between the first and second gripping means, and;
- An impact or bumping device connected to the suspension structure, such as an impact or buffing pad, arranged to be moved relative to the suspension structure between:
∘ A collapsed resting position where the impact or bumping device is positioned against a rear or top of the van; and
∘ An unfolded use condition, where the impactor extends backwards from the rear of the van; **characterised in that**
- the impact or bumping device is rotatably connected to the suspension structure, where the impact or bumping device is positioned against a rear of the van in the collapsed rest position.
